# EUROPÄISCHE PATENTSCHRIFT

(11) **EP 2 795 167 B1**
(45) Veröffentlichungstag und Bekanntmachung des Hinweises auf die Patenterteilung: **16.03.2016**
(21) Anmeldenummer: 12809763.1
(22) Anmeldetag: 18.12.2012
(51) Int. Cl.: F16K 1/22, F16K 1/226, F16K 41/10

(54) **VENTILVORRICHTUNG**
VALVE DEVICE
DISPOSITIF FORMANT SOUPAPE

(30) Priorität: 19.12.2011 DE 102011089080
(43) Veröffentlichungstag der Anmeldung: 29.10.2014
(73) Patentinhaber: Continental Automotive GmbH, 30165 Hannover (DE)
(72) Erfinder: WEIS, Christian, 55257 Budenheim (DE)
(86) Internationale Anmeldenummer: PCT/EP2012/075912
(87) Internationale Veröffentlichungsnummer: WO 2013/092561

(56) Entgegenhaltungen:
- WO-A1-93/25804
- DE-A1- 4 113 019
- DE-A1- 10 307 471
- DE-B- 1 179 049

## Beschreibung

Gegenstand der Erfindung ist eine Ventilvorrichtung mit einem Gehäuse, einem in dem Gehäuse verlaufenden Strömungskanal, in dem eine Ventilklappe auf einer senkrecht zur Strömungsrichtung angeordneten Welle befestigt ist, wobei die Welle drehbar in dem Gehäuse gelagert ist. Dokument DE 41 13 019 A1 offenbart eine solche Ventilvorrichtung mit einer Ventilklappe und einer Abdichtung.

Derartige Ventilvorrichtungen finden Verwendung als Abgasklappen in Kraftfahrzeugen und sind somit bekannt. Bei den bekannten Abgasklappen ist die Welle zu beiden Seiten des Strömungskanals in je einer Lagerbuchse gelagert. Die Lagerbuchsen sind in entsprechenden Bohrungen des Gehäuses angeordnet und als Fest- und Loslager ausgebildet. Die Bohrungen im Gehäuse weisen zusätzlich Abdichtungen auf, um zu verhindern, dass das im Strömungskanal strömende Abgas über die Bohrungen nach außen in die Umwelt gelangt.

Der Erfindung liegt die Aufgabe zugrunde, eine Ventilvorrichtung zu schaffen, die eine sichere und zuverlässige Lagerung der Welle mit möglichst wenigen Bauteilen bei einem sicheren Betrieb der Ventilvorrichtung ermöglicht.

Gelöst wird die Aufgabe dadurch, dass das als Loslager ausgebildete Lager, von einem Federtopf umgeben ist, dessen Boden an einer Lagerbuchse des Loslagers anliegt und dessen Mantelfläche eine radial gewellte Form besitzt.

Mit der Anordnung eines Federtopfes wird zum einen die Abdichtung der Lagerstelle realisiert. Gleichzeitig erfolgt darüber die Vorspannung des Loslagers, so dass die Welle axial spielfrei gelagert werden kann. Zusätzlich Bauteile werden für diese beiden Funktionen nicht benötigt.

In einer vorteilhaften Ausgestaltung umgibt der Federtopf den die Bohrung umgebenden Gehäuseteil.

Eine gute Kühlung des Federtopfes bei gleichzeitig guten Federeigenschaften wird erreicht, wenn der Federtopf aus Metall besteht.

Zur besseren Verbindung des Federtopfes mit dem Gehäuse, weist der Federtopf einen Flansch auf, mit dem er am Gehäuse anliegt.

Für eine dichte Verbindung, welche den Austritt von Abgasen aus dem Strömungskanal verhindert, ist der Flansch mit dem Gehäuse verschweißt oder verschraubt. Dabei ist es denkbar, eine zusätzliche Dichtung vorzusehen.

An einem Ausführungsbeispiel wird die Erfindung näher erläutert. Es zeigt in:

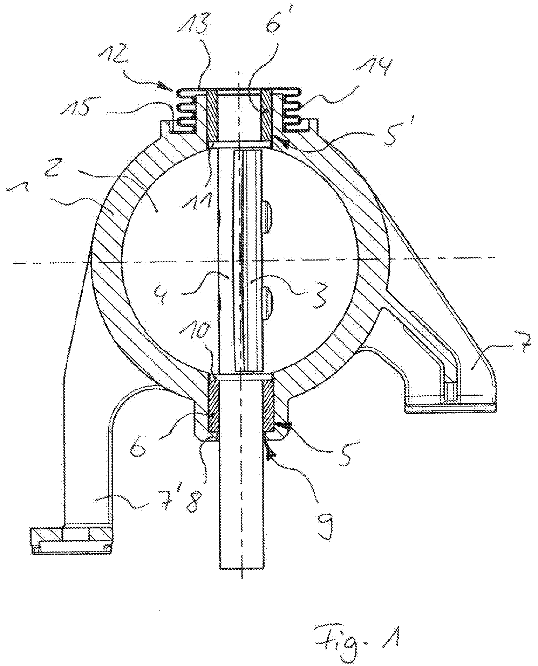

- Fig. 1: eine erfindungsgemäße Ventilvorrichtung im Schnitt.

Die Ventilvorrichtung in Figur 1 besteht aus einem Gehäuse 1, einem in dem Gehäuse 1 verlaufenden Strömungskanal 2, in dem eine Ventilklappe 3 auf einer senkrecht zur Strömungsrichtung angeordneten Welle 4 befestigt ist, wobei die Welle 4 drehbar in dem Gehäuse 1 gelagert ist. Für die Lagerung weist das Gehäuse Bohrungen 5, 5' auf, in denen Lagerbuchsen 6, 6' angeordnet sind. Über Stege 7, 7' ist das Gehäuse 1 mit anderen Bauteilen verbindbar. In der gezeigten Darstellung ist in der Bohrung 5 das Festlager angeordnet. Die Bohrung 5 weist dazu einen Boden 8 auf, der eine Öffnung 9 besitzt, welche von der Welle 4 bis zu einem nicht dargestellten Antrieb durchdrungen wird. An dem Boden 8 liegt die Lagerbuchse 6 an, die auf ihrer gegenüberliegenden Seite von einem Bund 10 der Welle 4 begrenzt wird. Die Bohrung 5' nimmt die Lagerbuchse 6' auf, ohne die axiale Bewegung der Lagerbuchse 6' zu beschränken. Klappenseitig liegt an der Lagerbuchse 6' ein Bund 11 der Welle 4 an. Die Lagerbuchse 6' ist so in der Bohrung 5' angeordnet, dass sie zu einem Teil aus der Bohrung 5' herausragt. Ein Federtopf 12 umgibt das die Bohrung 5' umgebende Gehäuseteil. Der Federtopf 12 besteht aus einem Boden 13, der an der Lagerbuchse 6' anliegt, und einer radial gewellten Mantelfläche 14. Mit einem Flansch 15 liegt der Federtopf 12 am Gehäuse 1 an. Die Struktur der gewellten Mantelfläche 14 erzeugt eine Federkraft, so dass der Boden 13 ein Kraft in Richtung der Lagerbuchse 6' erzeugt, was zu einer Vorspannung dieses Loslagers und somit zu einer axialspielfreien Lagerung führt. Zur Abdichtung der Bohrung 5' und zur Erzeugung der Federkraft ist der Flansch 15 mit dem Gehäuse 1 verschweißt. Neben dieser Ausführungsform können Los- und Festlager auch vertauscht angeordnet sein, so dass das Loslager mit dem Federtopf dann auf der dem Antrieb der Welle zugewandten Seite angeordnet ist. In dieser Variante liegt der Boden des Federtopfes ebenso an der Lagerbuchse an und ist nur zum Durchtritt der Welle unterbrochen.

## Patentansprüche

1. Ventilvorrichtung mit einem Gehäuse, einem in dem Gehäuse verlaufenden Strömungskanal, in dem eine Ventilklappe auf einer senkrecht zur Strömungsrichtung angeordneten Welle befestigt ist, wobei die Welle drehbar in dem Gehäuse gelagert ist, **dadurch gekennzeichnet, dass** das als Loslager ausgebildete Lager (5', 6'), von einem Federtopf (12) umgeben ist, dessen Boden (13) an einer Lagerbuchse (6') des Loslagers anliegt, und dessen Mantelfläche (14) eine radial gewellte Form besitzt.

2. Ventilvorrichtung nach Anspruch 1, **dadurch gekennzeichnet, dass** der Federtopf (12) den Gehäuseteil umgibt, in dem eine Bohrung (5') angeordnet ist, die die Lagerbuchse (6') aufnimmt.

3. Ventilvorrichtung nach Anspruch 1, **dadurch gekennzeichnet, dass** der Federtopf (12) aus Metall besteht.

4. Ventilvorrichtung nach Anspruch 1, **dadurch gekennzeichnet, dass** der Federtopf (12) einen Flansch (15) aufweist, der mit dem Gehäuse (1) verbunden ist.

5. Ventilvorrichtung nach Anspruch 4, **dadurch gekennzeichnet, dass** der Flansch (15) mit dem Gehäuse (1) verschweißt oder verschraubt ist.

## Claims

1. Valve device having a housing and having a flow duct which runs in the housing and in which a valve flap is fastened to a shaft which is arranged perpendicular to the flow direction, wherein the shaft is mounted rotatably in the housing, **characterized in that** the bearing (5', 6') which is in the form of a floating bearing is surrounded by a spring pot (12), the base (13) of which spring pot bears against a bearing bushing (6') of the floating bearing, and the shell surface (14) of which spring pot has a radially undulating shape.

2. Valve device according to Claim 1, **characterized in that** the spring pot (12) surrounds the housing part in which a bore (5') is arranged which accomadates the bearing bushing (6').

3. Valve device according to Claim 1, **characterized in that** the spring pot (12) is composed of metal.

4. Valve device according to Claim 1, **characterized in that** the spring pot (12) has a flange (15) which is connected to the housing (1).

5. Valve device according to Claim 4, **characterized in that** the flange (15) is welded or screwed to the housing (1).

## Revendications

1. Dispositif formant soupape et comportant un boîtier, un canal d'écoulement qui s'étend dans le boîtier et dans lequel un clapet de soupape est monté sur un arbre disposé perpendiculairement au sens de l'écoulement, l'arbre étant monté tournant dans le boîtier, **caractérisé en ce que** le palier (5', 6') constitué en palier libre est entouré d'un pot (12) formant ressort, dont le fond (13) s'applique à un coussinet (6') du palier libre et dont la surface (14) latérale a une forme ondulée radialement.

2. Dispositif formant soupape suivant la revendication 1, **caractérisé en ce que** le pot (12) formant ressort entoure la partie du boîtier, dans laquelle est prévue un trou (5') qui reçoit le coussinet (6').

3. Dispositif formant soupape suivant la revendication 1, **caractérisé en ce que** le pot (12) formant ressort est en métal.

4. Dispositif formant soupape suivant la revendication 1, **caractérisé en ce que** le pot (12) formant ressort a une bride (15), qui est reliée au boîtier (1).

5. Dispositif formant soupape suivant la revendication 4, **caractérisé en ce que** la bride (15) est soudée ou est vissée au boîtier (1).
